# EUROPEAN PATENT APPLICATION

(11) **EP 2 693 600 A1**
(43) Date of publication of application: **05.02.2014**
(21) Application number: 12763849.2
(22) Date of filing: 27.03.2012
(51) Int. Cl.: H02J 17/00, H02J 7/00

(54) **POWER TRANSMISSION SYSTEM**

(30) Priority: 31.03.2011 JP 2011079035
(71) Applicant: Equos Research Co., Ltd., Chiyoda-ku Tokyo 101-0021 (JP)
(72) Inventor: YAMAKAWA, Hiroyuki, Tokyo 101-0021 (JP); ITO, Yasuo, Tokyo 101-0021 (JP)
(74) Representative: TBK
(86) International application number: PCT/JP2012/002122
(87) International publication number: WO 2012/132413

(57) **Abstract**

Provided is a power transmission system that can determine an optimal frequency for power transmission, and transmit power efficiently.

The power transmission system of the present invention includes: an inverter unit 130 that converts a DC voltage into an AC voltage of a predetermined frequency to output; a

power-transmission antenna 140 into which the AC voltage is input from the inverter unit 130; and a power-transmission control unit 150 that controls a frequency of an AC voltage output by the inverter unit 130, with electric energy being transmitted via an electromagnetic field from the power-transmission antenna 140 to a power-reception antenna that faces the power-transmission antenna 140, wherein the power-transmission control unit 150 controls in such a way as to select a frequency at which an antenna unit works as a constant voltage source when seen from a load side, to transmit power.

## Description

### Technical Field

The present invention relates to a wireless power transmission system in which a magnetic resonance antenna of a magnetic resonance method is used.

### Background Art

In recent years, without using power cords and the like, development of technology for wirelessly transmitting power (electric energy) has become popular. Among the methods for wirelessly transmitting power, as a technique that is of particularly high interest, there is a technique called a magnetic resonance method. The magnetic resonance method was proposed by a research group of the Massachusetts Institute of Technology in 2007. The related technique thereof is disclosed, for example, in Patent Document 1 (Jpn. PCT National Publication No. 2009-501510).

In a wireless power transmission system of the magnetic resonance method, a resonance frequency of a power-transmission-side antenna is equal to a resonance frequency of a power-reception-side antenna. Therefore, from the power-transmission-side antenna to the power-reception-side antenna, energy is transmitted efficiently. One of the major features is that a power transmission distance can be several dozen centimeters to several meters.

In the above wireless power transmission system of the magnetic resonance method, for example, if one antenna is mounted on a moving object such as an electric vehicle, the arrangement between antennas changes each time power is transmitted, meaning that a frequency that gives an optimal power transmission efficiency varies accordingly. Therefore, a technique has been proposed to determine an optimal frequency for actual power transmission by sweeping frequencies before power is transmitted. For example, what is disclosed in Patent Document 2 (JP 2010-68657A) is a wireless power transmission device that includes AC power output means for outputting AC power of a predetermined frequency, a first resonance coil, and a second resonance coil that is so disposed as to face the first resonance coil, with the AC power output means outputting the AC power which is output to the first resonance coil, and the AC power being transmitted to the second resonance coil in a non-contact manner by means of resonance phenomena, the wireless power transmission device including: frequency setting means for measuring a resonance frequency of the first resonance coil and a resonance frequency of the second resonance coil, and setting a frequency of the AC power output by the AC power output means to an intermediate frequency of the resonance frequencies.

### Patent Document 1

Jpn. PCT National Publication No. 2009-501510

### Patent Document 2

JP 2010-68657A

### Disclosure of the Invention

### Problems to be Solved by the Invention

By the way, around a frequency that gives an extreme value of transmission efficiency, a frequency at which a reception antenna works as a constant current source, and a frequency at which the reception antenna works as a constant voltage source exist. If the frequency at which the reception antenna works as a constant current source is used, the problem is that, when an emergency shutdown occurs due to a load side, a voltage of a reception antenna's end portion becomes higher.

### Means for Solving the Problems

In order to solve the above problem, the invention of claim 1 includes: an inverter unit that converts a DC voltage into an AC voltage of a predetermined frequency to output; a power-transmission antenna into which the AC voltage is input from the inverter unit; and a control unit that controls a frequency of an AC voltage output by the inverter unit, with electric energy being transmitted via an electromagnetic field from the power-transmission antenna to a power-reception antenna 210 that faces the power-transmission antenna, wherein the control unit controls in such a way as to select a frequency at which an antenna unit works as a constant voltage source when seen from a load side, to transmit power.

### Advantages of the Invention

The power transmission system of the present invention can transmit power in a stable manner without sending the voltage higher when the load drops sharply.

### Brief Description of the Drawings

FIG. 1 is a block diagram of a power transmission system according to an embodiment of the present invention.
FIG. 2 is a diagram schematically showing an example in which a power transmission system of an embodiment of the present invention is mounted on a vehicle.
FIG. 3 is a diagram showing an inverter unit of a power transmission system of an embodiment of the present invention.
FIG. 4 is an exploded perspective view of a power-reception antenna 210 used in a power transmission system of an embodiment of the present invention.
FIG. 5 is a schematic cross-sectional view showing how power is transmitted between antennas in power transmission of an embodiment of the present invention.
FIG. 6 is a diagram showing a flowchart of a power transmission process in a power transmission system of an embodiment of the present invention.
FIG. 7 is a diagram showing relationship between frequency and power transmission efficiency.
FIG. 8 is a diagram schematically showing the state of current and electric fields at a first extreme-value frequency.
FIG. 9 is a diagram schematically showing the state of current and electric fields at a second extreme-value frequency.
FIG. 10 is a diagram showing characteristics at an extreme-value frequency (first frequency) that generates a magnetic wall, among extreme-value frequencies that give two extreme values.
FIG. 11 is a diagram showing characteristics at an extreme-value frequency (second frequency) that generates an electric wall, among extreme-value frequencies that give two extreme values.

### Embodiments for Carrying Out the Invention

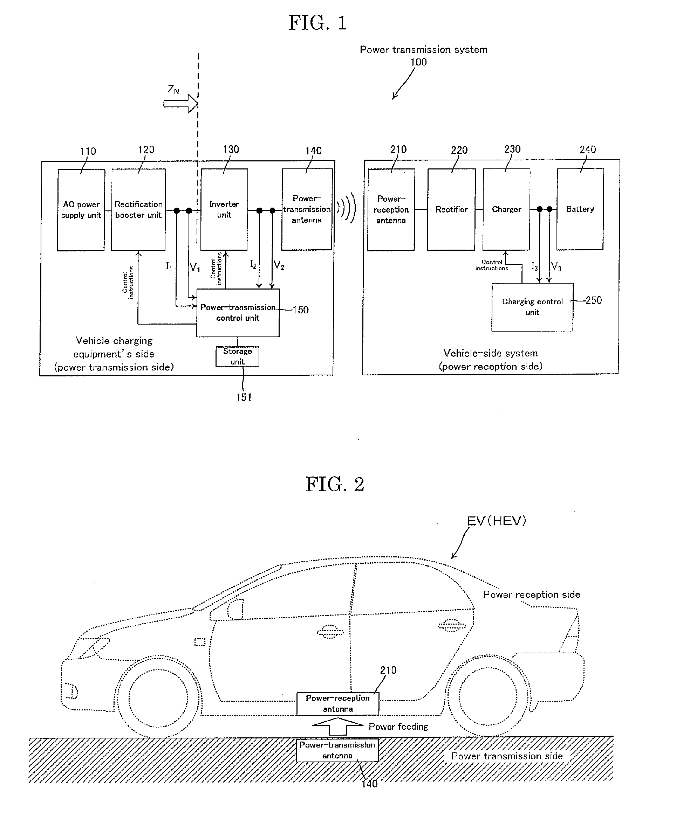

Hereinafter, an embodiment of the present invention will be described with reference to the accompanying drawings. FIG. 1 is a block diagram of a power transmission system according to an embodiment of the present invention. FIG. 2 is a diagram schematically showing an example in which a power transmission system 100 of the embodiment of the present invention is mounted on a vehicle. The power transmission system 100 of the present invention is, for example, suitable for use in a system that charges batteries mounted on vehicles, such as electric vehicles (EV) and hybrid electric vehicles (HEV). Accordingly, in a bottom section of the vehicle, a power-reception antenna 210 is disposed to receive power.

In the power transmission system 100 of the present embodiment, power is transmitted in a non-contact manner to the above vehicle. Therefore, the power transmission system 100 is provided in a stop space where the vehicle can be stopped. In the stop space that serves as a space for charging the vehicle, a power-transmission antenna 140 of the power transmission system 100 of the present embodiment, and the like are buried in a ground section. A user of the vehicle stops the vehicle in the stop space where the power transmission system of the present embodiment is provided; from the power-transmission antenna 140 to the power-reception antenna 210 that is mounted on the vehicle, electric energy is transmitted through electromagnetic fields.

The power transmission system 100 of the present embodiment is used as described above. Therefore, the positional relationship between the power-transmission antenna 140 and the power-reception antenna 210 changes each time power is transmitted; a frequency that gives an optimal power transmission efficiency varies accordingly. Therefore, after the vehicle is stopped, or after the positional relationship between the power-transmission antenna 140 and the power-reception antenna 210 is fixed, an optimal frequency for power transmission is determined by sweeping frequencies before power is actually transmitted for charging.

A rectification booster unit 120 of vehicle charging equipment (power-transmission side) includes a converter that converts an AC voltage supplied from an AC power supply unit 110 like a commercial power source into a constant direct current, and raises an output from the converter to a predetermined voltage. Settings of voltages generated by the rectification booster unit 120 can be controlled from a power-transmission control unit 150.

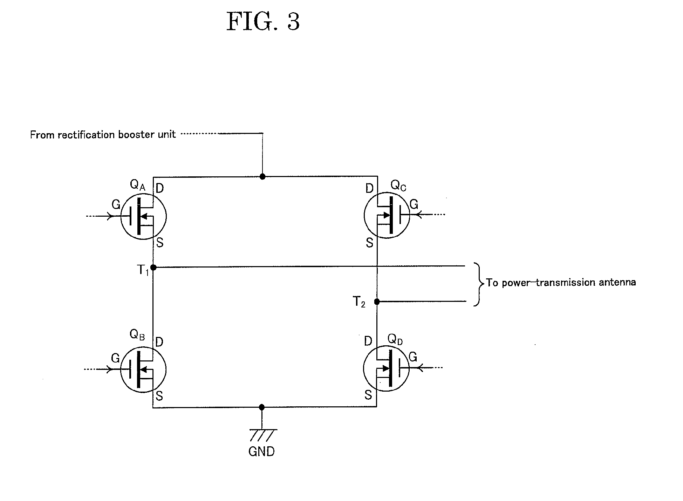

An inverter unit 130 generates a predetermined AC voltage, using a DC voltage supplied from the rectification booster unit 120, and inputs the AC voltage into the power-transmission antenna 140. FIG. 3 is a diagram showing the inverter unit of the power transmission system of the embodiment of the present invention. As shown in FIG. 3, for example, the inverter unit 130 includes four field-effect transistors (FETs) Q_{A} to Q_{D}, which are connected by a full bridge method.

According to the present embodiment, the power-transmission antenna 140 is connected between a connection section T1, which is between the switching elements Q_{A} and Q_{B} that are connected in series, and a connection section T2, which is between the switching elements Q_{C} and Q_{D} that are connected in series. When the switching elements Q_{A} and Q_{D} are ON, the switching elements Q_{B} and Q_{C} are OFF. When the switching elements Q_{B} and Q_{C} are ON, the switching elements Q_{A} and Q_{D} are OFF. As a result, between the connection sections T1 and T2, a square-wave AC voltage is generated.

A drive signal for the switching elements Q_{A} to Q_{D} that constitute the above inverter unit 130 is input from the power-transmission control unit 150. A frequency that is used to drive the inverter unit 130 can be controlled from the power-transmission control unit 150.

An output from the above inverter unit 130 is supplied to the power-transmission antenna 140. The power-transmission antenna 140 includes a coil described later, which includes an inductance component. The power-transmission antenna 140 resonates with the power-reception antenna 210, which is mounted on a vehicle in such a way as to face the power-transmission antenna 140. Therefore, electric energy that is output from the power-transmission antenna 140 can be transmitted to the power-reception antenna 210.

Incidentally, when the output from the inverter unit 130 is input to the power-transmission antenna 140, impedance-matching may be carried out once by a matching box, which is not shown in the diagrams. The matching box can include a passive element having a predetermined circuit constant.

In the power transmission system of the embodiment of the present invention, when power is transmitted efficiently from the power-transmission-side power-transmission antenna 140 of the power transmission system 100 to the power-reception-side power-reception antenna 210, a resonance frequency of the power-transmission antenna 140 is equal to a resonance frequency of the power-reception antenna 210. Therefore, from the power-transmission-side antenna to the power-reception-side antenna, energy is transmitted efficiently.

Voltage V₁ and current I₁, which are input into the inverter unit 130, and voltage V₂ and current I₂, which are output from the inverter unit 130, are measured by the power-transmission control unit 150. The power-transmission control unit 150 acquires, from the measured voltage V₁ and current I₁, input power (W₁ = V₁×I₁) that is input into the inverter unit 130. The power-transmission control unit 150 also acquires, from the measured voltage V₂ and current I₂, output power (W₂ = V₂×I₂) that is output from the inverter unit 130. The power-transmission control unit 150 includes general-purpose information processing units, such as a CPU, a ROM that holds a program running on the CPU, and a RAM that serves as a work area of the CPU. The power-transmission control unit 150 calculates efficiency (W₁/W₂) of the inverter unit 130 from the acquired input power (W₁) and output power (W₂).

A storage unit 151 of the power-transmission control unit 150 is a temporary storage means for storing a frequency and the calculated inverter efficiency in such a way that the frequency and the calculated inverter efficiency are associated with each other when sweeping of frequencies is carried out. The power-transmission control unit 150 performs a control process in such a way that the output power of the inverter unit 130 becomes a predetermined power. The power-transmission control unit 150 calculates the inverter efficiency of the inverter unit 130, while changing the frequency of the AC voltage output by the inverter unit 130, to store in the storage unit 151.

The power-transmission control unit 150 controls the voltage of the DC voltage output by the rectification booster unit 120, and the frequency of the AC voltage output by the inverter unit 130 to actually transmit power for charging.

The following describes the configuration of the power transmission system 100 that is provided on the vehicle. In the power-reception-side system of the vehicle, the power-reception antenna 210 resonates with the power-transmission antenna 140, thereby receiving electric energy output from the power-transmission antenna 140.

The AC power received by the power-reception antenna 210 is rectified in a rectifier 220. The rectified power is accumulated in a battery 240 via a charger 230. Based on instructions from a charging control unit 250, the charger 230 controls charging of the battery 240. Incidentally, what is described in the present embodiment is an example in which the battery 240 is used as a load of the power-reception-side system, and the battery 240 is charged. However, another load may be used as a load of the power-reception-side system.

Voltage V₃ and current I₃, which are input from the charger 230 to the battery 240, are measured by the charging control unit 250. Based on the measured voltage V₃ and current I₃, the charging control unit 250 is so designed as to be able to control the charger 230, and control charging of the battery 240 in accordance with an appropriate charging profile of the battery 240. The charger 230 can select a constant current, constant output, or constant voltage to charge the battery 240.

The charging control unit 250 includes general-purpose information processing units, such as a CPU, a ROM that holds a program running on the CPU, and a RAM that serves as a work area of the CPU. The charging control unit 250 runs in such a way as to work together with each component that is shown in the diagrams and is connected to the charging control unit 250.

The charging control unit 250 stores the charging profile of the battery 240, as well as algorithm for enabling the charging control unit 250 to operate in accordance with the profile.

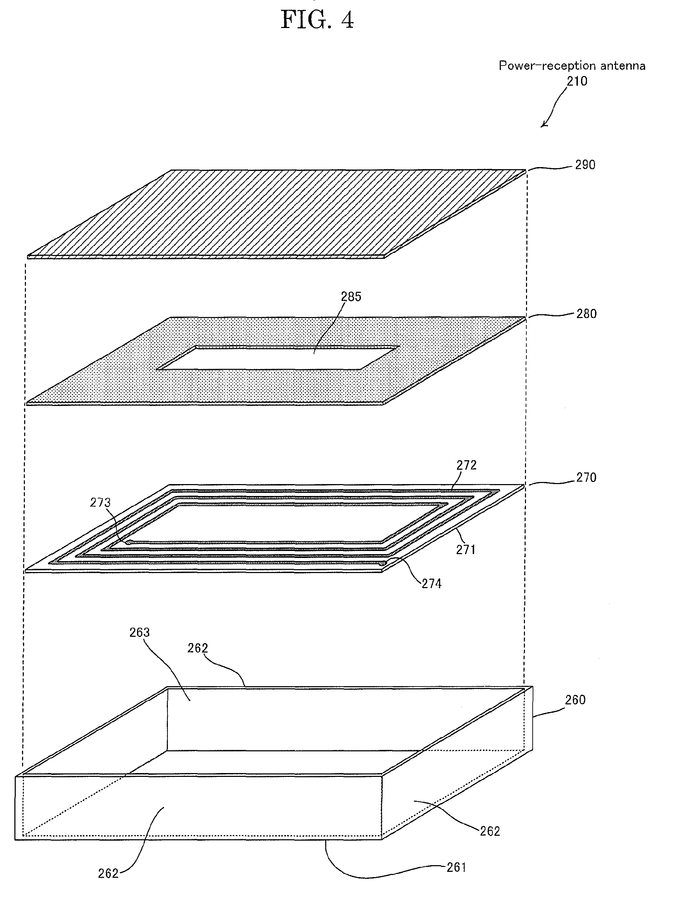

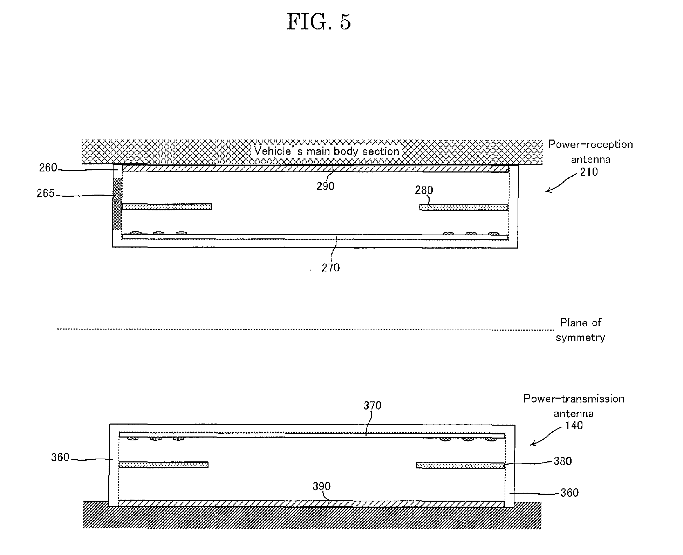

FIG. 4 is an exploded perspective view of the power-reception antenna 210 used in the power transmission system of the embodiment of the present invention. FIG. 5 is a schematic cross-sectional view showing how power is transmitted between the antennas in power transmission of the embodiment of the present invention. Incidentally, in the embodiment described below, what is described is an example in which a rectangular flat-plate coil body is used as a coil body 270. However, an antenna of the present invention is not limited to a coil of such a shape. For example, a circular flat-plate coil body or the like may be used as the coil body 270. The coil body 270 functions as a magnetic resonance antenna section of the power-reception antenna 210. The "magnetic resonance antenna section" includes not only an inductance component of the coil body 270, but also a capacitance component that is based on stray capacitance thereof, or a capacitance component that is based on an intentionally added capacitor.

A coil case 260 is used to house the coil body 270, which includes an inductance component of the power-reception antenna 210. For example, the coil case 260 is of a box shape with an opening, and is made of resin such as polycarbonate. From each side of a rectangular bottom plate section 261 of the coil case 260, a side plate section 262 is so provided as to extend in a vertical direction with respect to the bottom plate section 261. In an upper section of the coil case 260, an upper opening section 263 is so provided as to be surrounded by the side plate sections 262. The power-reception antenna 210 packaged in the coil case 260 is mounted on a vehicle' s main body section in such a way that the upper opening section 263 faces the vehicle's main body section. To attach the coil case 260 to the vehicle' s main body section, any conventional known method can be used. Incidentally, in order to improve attachment performance to the vehicle' s main body section, around the upper opening section 263, a flange member or the like may be used.

The coil body 270 includes a rectangular flat-plate substrate 271, which is made of glass epoxy, and a spiral conductive section 272, which is formed on the substrate 271. An inner-peripheral-side first end section 273 of the spiral conductive section 272, and an outer-peripheral-side second end section 274 are electrically connected to a conductive line (not shown). Therefore, power received by the power-reception antenna 210 can be led to a rectification unit 202. The above coil body 270 is placed on the rectangular bottom plate section 261 of the coil case 260, and is fixed onto the bottom plate section 261 by using an appropriate fixing means.

A magnetic shielding body 280 is a flat-plate magnetic member having a hollow section 285. In order to make the magnetic shielding body 280, a substance that is high in specific resistance, high in magnetic permeability, and small in magnetic hysteresis is desirable; for example, a magnetic material such as ferrite can be used. The magnetic shielding body 280 is fixed to the coil case 260 by using an appropriate means. Above the coil body 270, the magnetic shielding body 280 is disposed with a certain amount of space therebetween. Because of such a layout, magnetic field lines that are generated at the power-transmission antenna 140 have a high possibility of penetrating the magnetic shielding body 280. In transmitting power from the power-transmission antenna 140 to the power-reception antenna 210, an impact of metal objects that constitute the vehicle's main body section on the magnetic field lines becomes insignificant.

In the upper opening section 263 of the coil case 260, a rectangular flat-plate metal lid section 290 is disposed above the shielding body 280 with a predetermined distance therebetween in such a way as to cover the upper opening section 263. For the metal lid section 290, any metal material can be used. According to the present embodiment, for example, aluminum is used.

As described above, in the power-reception antenna 210 of the present invention, above the coil body 270, the magnetic shielding body 280 is provided. Therefore, even if the power-reception antenna 210 is mounted on the bottom surface of the vehicle, it is possible to curb the influence of metal objects and the like that constitute the vehicle's main body section, and to transmit power efficiently.

Moreover, the above configuration of the power-reception antenna 210 is also applied to the power-transmission-side antenna that constitutes the power transmission system 100. In this case, as shown in FIG. 5, the power-transmission antenna 105 is plane-symmetrical (mirror-image symmetrical) to the power-reception antenna 210 with respect to a horizontal plane.

In the power-transmission antenna 140, as in the case of the power reception side, a coil body 370 is placed in a coil case 360, and a magnetic shielding body 380 is provided a predetermined distance away therefrom. A metal lid section 390 is used to seal the coil case 260.

The following describes transmission of power by the power transmission system 100 of the present embodiment with the above configuration. As described above, in the power transmission of the power transmission system 100, first, before charging actually takes place, frequency-sweeping is carried out by power used for the power transmission, thereby selecting an extreme value of inverter efficiency; based on the extreme value, a frequency is determined to drive the inverter unit 130 for actual power transmission. In the power transmission of the power transmission system 100 of the present embodiment, first an optimal frequency is selected as described above, and then power is transmitted by using the selected optimal frequency.

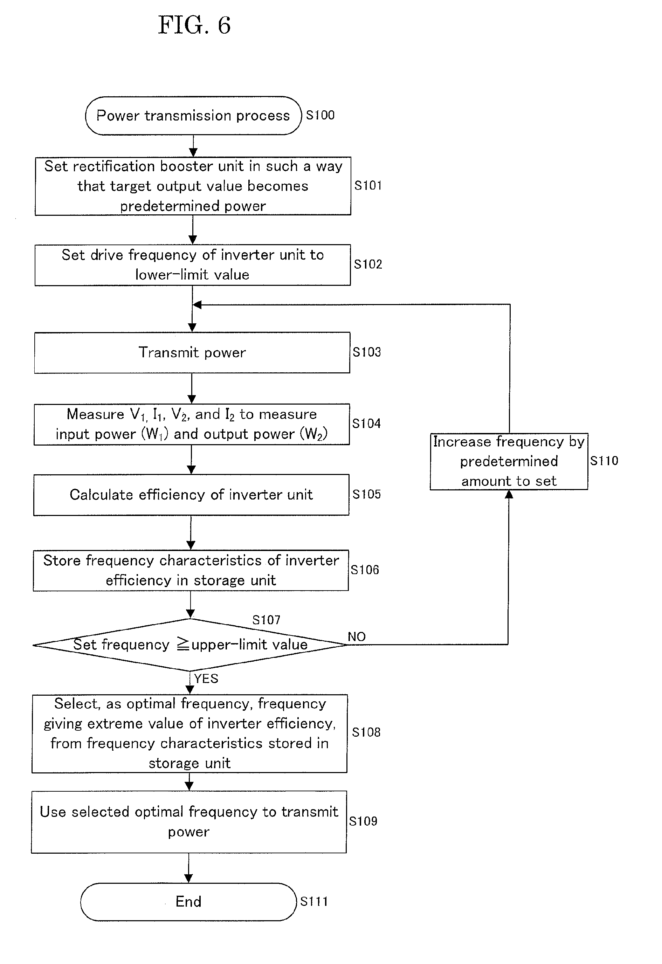

FIG. 6 is a diagram showing a flowchart of the power transmission process in the power transmission system of the embodiment of the present invention. The flowchart is performed by the power-transmission control unit 150. In FIG. 6, after the power transmission process is started at step S100, the power-transmission control unit 150 at the subsequent step S101 sets the rectification booster unit 120 in such a way that a target output value becomes a predetermined power value.

At step S102, a drive frequency of the inverter unit 130 is set to a lower-limit value for sweeping.

At step S103, power is transmitted by first power. At step S104, V₁, I₁, V₂, and I₂ are measured to measure the input power (W₁) and the output power (W₂). At step S105, based on the input power (W₁) and the output power (W₂), the efficiency η (= W₁/W₂) of the inverter unit 130 is calculated.

At step S106, the calculated inverter efficiency and the frequency are stored in the storage unit 151 in such a way as to be associated with each other. The inverter efficiency is calculated with varying frequencies. As a result, in the storage unit 151, frequency characteristics of the inverter efficiency are accumulated.

At step S107, a determination is made as to whether or not the set frequency is greater than or equal to an upper-limit frequency for sweeping. If the determination of step S107 is NO, the process proceeds to step S110; after the frequency is increased by a predetermined amount and is set, the process returns to step S103 and enters a loop.

If the determination of step S107 is YES, all the frequencies have been swept. Therefore, the process proceeds to step S108, and, from the frequency characteristics stored in the storage unit 151, a frequency that gives an extreme value of inverter efficiency is selected.

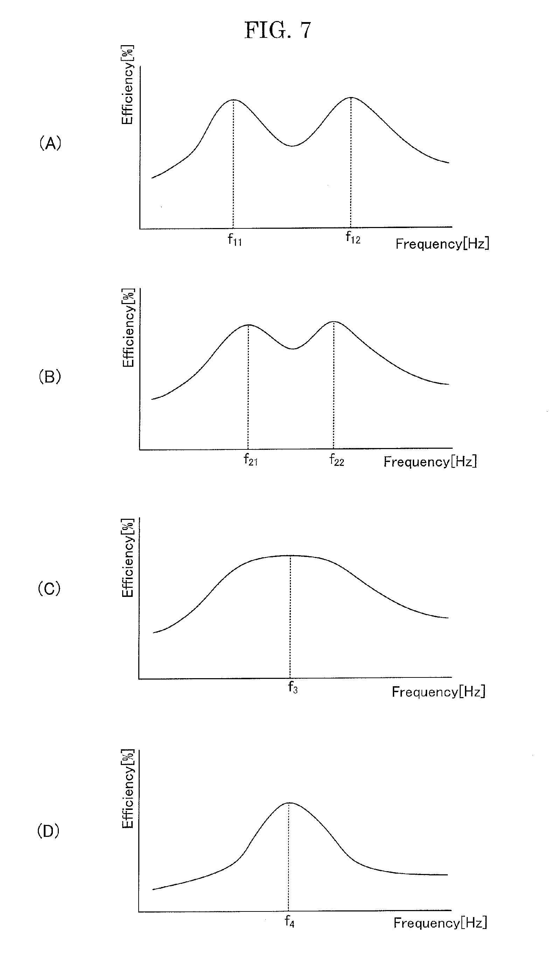

Patterns of frequency characteristics of power transmission efficiency will be described. FIG. 7 is a diagram showing relationship between frequency and power transmission efficiency in the power transmission system of the present embodiment.

FIG. 7A shows frequency characteristics of power transmission efficiency in a situation where the power-reception antenna 210 and the power-transmission antenna 140 are most appropriately disposed. As shown in FIG. 7A, there are two frequencies giving two extreme values; the extreme-value frequency of a lower frequency is defined as a first extreme-value frequency, and the extreme-value frequency of a higher frequency as a second extreme-value frequency.

FIGS. 7A, 7B, 7C, and 7D show frequency characteristics of power transmission efficiency: Moving from FIG. 7A to FIG. 7B, and then to FIGS. 7C and 7D, a position gap between the power-reception antenna 210 and the power-transmission antenna 140 becomes larger.

As shown in FIGS. 7C and 7D, if there is one frequency that gives an extreme value of transmission efficiency, the frequency of the extreme value is selected at step S108. As shown in FIGS. 7A and 7B, if there are two frequencies that give extreme values, i.e. the first and second extreme-value frequencies, what is selected according to the present embodiment is an extreme-value frequency that generates an electric wall on a plane of symmetry between the power-transmission antenna 140 and the power-reception antenna 210.

The following describes the concept of an electric wall and magnetic wall that are generated on a plane of symmetry between the power-transmission antenna 140 and the power-reception antenna 210.

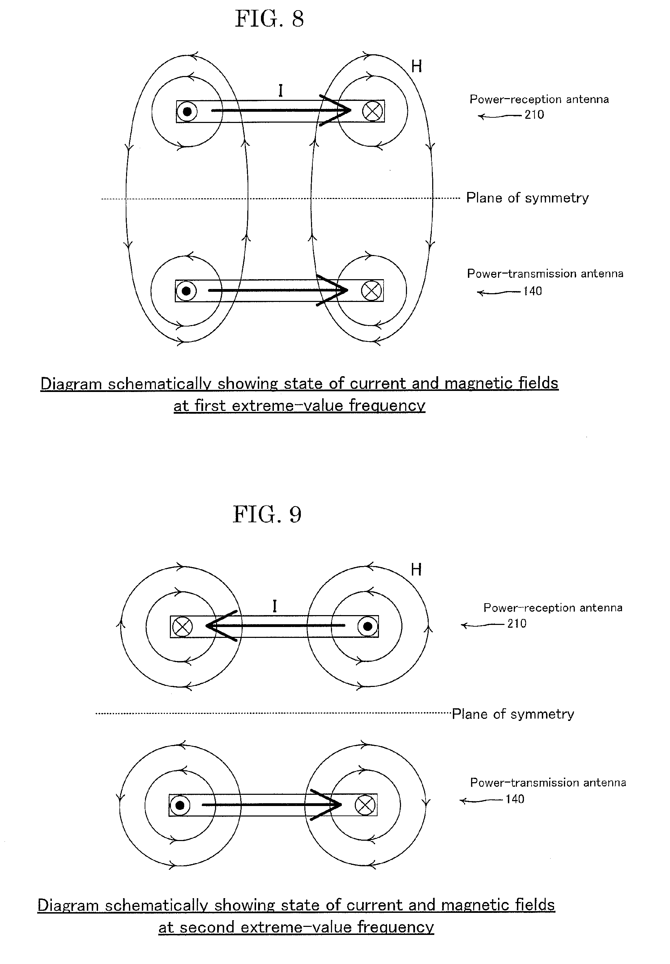

FIG. 8 is a diagram schematically showing the state of current and electric fields at the first extreme-value frequency. At the first extreme-value frequency, the phase of the current flowing through the power-transmission antenna 140 is substantially equal to the phase of the current flowing through the power-reception antenna 210. A position where magnetic field vectors are aligned is near the central sections of the power-transmission antenna 140 and power-reception antenna 210. In this state, a magnetic wall is considered to be generated: a magnetic field of the magnetic wall is vertical with respect to a plane of symmetry between the power-transmission antenna 140 and the power-reception antenna 210.

FIG. 9 is a diagram schematically showing the state of current and electric fields at the second extreme-value frequency. At the second extreme-value frequency, the phase of the current flowing through the power-transmission antenna 140 is substantially opposite to the phase of the current flowing through the power-reception antenna 210. A position where magnetic field vectors are aligned is near a plane of symmetry between the power-transmission antenna 140 and the power-reception antenna 210. In this state, an electric wall is considered to be generated: a magnetic field of the electric wall is horizontal with respect to a plane of symmetry between the power-transmission antenna 140 and the power-reception antenna 210.

Incidentally, as for the concept of the above electric wall and magnetic wall, the following studies are applied herein: Takehiro Imura, Yoichi Hori, "Transmission technology by electromagnetic resonant coupling," IEEJ Journal, Vol.129, No.7, 2009; Takehiro Imura, Hiroyuki Okabe, Toshiyuki Uchida, Yoichi Hori, "Research on electric-field coupling and magnetic coupling of non-contact power transmission in terms of equivalent circuits," IEEJ Trans. IA, Vol.130, No.1, 2010.

The following describes the reason why an extreme-value frequency that generates an electric wall on a plane of symmetry between the power-transmission antenna 140 and the power-reception antenna 210 is selected in the case of the present invention when there are two frequencies that give extreme values, i.e. the first and second extreme-value frequencies.

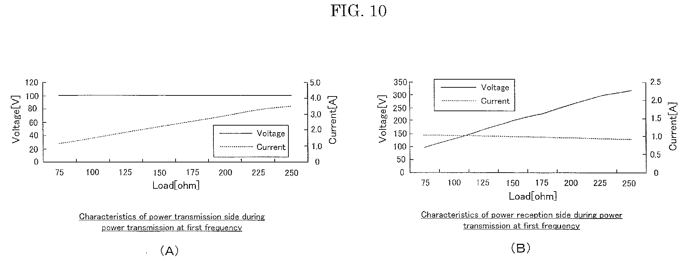

FIG. 10 is a diagram showing characteristics at an extreme-value frequency (first frequency) that generates a magnetic wall, among extreme-value frequencies that give two extreme values. FIG. 10A is a diagram showing how the power-transmission-side voltage (V₁) and current (I₁) change as a load of the battery 240 (load) is changed and varied. FIG. 10B is a diagram showing how the power-reception-side voltage (V₃) and current (I₃) change as a load of the battery 240 (load) is changed and varied. According to the characteristics shown in FIG. 10, it is clear that, as the load of the battery 240 (load) is increased at the power reception side, the voltage becomes higher.

At the above frequency that generates the magnetic wall, when seen from the battery 240, the power-reception antenna 210 works as a constant current source. At the frequency at which the power-reception antenna 210 works like a constant current source, if power is transmitted, and if an emergency shutdown occurs due to the failure of the battery 240 or the like at the load side, the voltage of both end sections of the power-reception antenna 210 would rise.

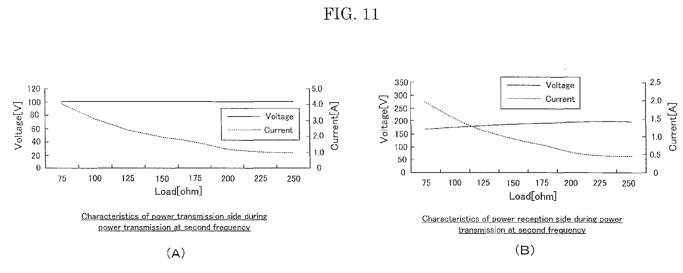

FIG. 11 is a diagram showing characteristics at an extreme-value frequency (second frequency) that generates an electric wall, among extreme-value frequencies that give two extreme values. FIG. 11A is a diagram showing how the power-transmission-side voltage (V₁) and current (I₁) change as a load of the battery 240 (load) is changed and varied. FIG. 11B is a diagram showing how the power-reception-side voltage (V₃) and current (I₃) change as a load of the battery 240 (load) is changed and varied. According to the characteristics shown in FIG. 11, it is clear that, as the load of the battery 240 (load) is increased at the power reception side, the current becomes smaller.

At the above frequency that generates the electric wall, when seen from the battery 240, the power-reception antenna 210 works as a constant voltage source. At the frequency at which the power-reception antenna 210 works like a constant voltage source, if power is transmitted, and if an emergency shutdown occurs due to the failure of the battery 240 or the like at the load side, the voltage of both end sections of the power-reception antenna 210 does not rise. Therefore, in the power transmission system of the present invention, the voltage does not become higher when the load drops sharply. It is possible to transmit power in a stable manner.

According to the characteristics of FIG. 10, to the power-reception-side battery 240 (load), it seems that the charging circuit works as a current source. According to the characteristics of FIG. 11, to the power-reception-side battery 240 (load), it seems that the charging circuit works as a voltage source. When the load is increased, the characteristics shown in FIG. 11 of decreasing current are more preferred for the battery 240 (load). According to the present embodiment, when there are two extreme-value frequencies, or the first and second extreme-value frequencies, an extreme-value frequency that generates an electric wall on a plane of symmetry between the power-transmission antenna 140 and the power-reception antenna 210 is selected.

Therefore, the power transmission system of the present invention can determine, even when there are two frequencies that give extreme values of transmission efficiency, an optimal frequency for power transmission, and can transmit power efficiently.

In the case where there are two frequencies that give two extreme values, if an extreme-value frequency that generates an electric wall on a plane of symmetry between the power-transmission antenna 140 and the power-reception antenna 210 is selected, it seems to the battery 240 (load) that the charging circuit works as a voltage source. Therefore, the advantage is that it is easy to handle because, when an output to the battery 240 is changed, an output of the inverter unit 130 is increased or decreased accordingly by the charging control. Moreover, the supplied power is automatically minimized when the charger 230 is stopped in an urgent manner, thereby eliminating the need for useless devices.

In the case where there are two frequencies that give two extreme values, if an extreme-value frequency that generates an electric wall on a plane of symmetry between the power-transmission antenna 140 and the power-reception antenna 210 is selected, it seems to the charger 230 that the rectifier 220 works as a voltage source. Therefore, the advantage is that it is easy to handle because, when an output to the battery 240 is changed, an output of the rectification booster unit 120 is increased or decreased accordingly by the charging control. Moreover, the supplied power is automatically minimized when the charger 230 is stopped in an urgent manner, thereby eliminating the need for useless devices.

In the case where there are two frequencies that give two extreme values, if an extreme-value frequency that generates a magnetic wall on a plane of symmetry between the power-transmission antenna 140 and the power-reception antenna 210 is selected, the supplied voltage needs to be controlled as the output of the charger 230 is decreased, requiring a communication means and a detection means and resulting in an increase in cost.

Returning to FIG. 6, at step S109, power is transmitted at the optimal frequency selected at step S108.

As described above, even when there are two frequencies that give extreme values of transmission efficiency, the power transmission system of the present invention can determine an optimal frequency for power transmission, and transmit power efficiently.

### Industrial Applicability

The power transmission system of the present invention is suitable for use in a system that charges vehicles such as electric vehicles (EV) and hybrid electric vehicles (HEV), which have increasingly become popular in recent years. In a power transmission system, around a frequency that gives an extreme value of transmission efficiency, a frequency at which a reception antenna works as a constant current source, and a frequency at which the reception antenna works as a constant voltage source exist. If the frequency at which the reception antenna works as a constant current source is used, a voltage of a reception antenna' s end portion might become higher when an emergency shutdown occurs due to a load side. In the power transmission system of the present invention, a frequency is so selected that the reception antenna seems to work as a constant voltage source, before power is transmitted. Therefore, it is possible to transmit power in a stable manner without sending the voltage higher when the load drops sharply. As a result, industrial applicability is very high.

### Explanation of Reference Symbols

100: Power transmission system
110: AC power supply unit
120: Rectification booster unit
130: Inverter unit
140: Power-transmission antenna
150: Power-transmission control unit
151: Storage unit
210: Power-reception antenna
220: Rectifier
230: Charger
240: Battery
250: Charging control unit
260: Coil case
261: Bottom plate section
262: Side plate section
263: (Upper) opening section
270: Coil body
271: Substrate
272: Conductive section
273: First end section
274: Second end section
280: Magnetic shielding body
285: Hollow section
290: Metal lid section
360: Coil case
370: Coil body
380: Magnetic shielding body
390: Metal lid section

## Claims

1. A power transmission system, comprising:
an inverter unit that converts a DC voltage into an AC voltage of a predetermined frequency to output;
a power-transmission antenna into which the AC voltage is input from the inverter unit; and
a control unit that controls a frequency of an AC voltage output by the inverter unit, with electric energy being transmitted via an electromagnetic field from the power-transmission antenna to a power-reception antenna that faces the power-transmission antenna, wherein
the control unit controls in such a way as to select a frequency at which an antenna unit works as a constant voltage source when seen from a load side, to transmit power.
